# EUROPEAN PATENT APPLICATION

(11) **EP 2 575 098 A1**
(43) Date of publication of application: **03.04.2013**
(21) Application number: 12183535.9
(22) Date of filing: 07.09.2012
(51) Int. Cl.: G06Q 20/00

(54) **Method for managing payments between a plurality of merchants and a plurality of users, corresponding system for managing payments, and computer program product**

(30) Priority: 28.09.2011 IT TO20110861
(71) Applicant: Movincom Servizi S.p.A., 10122 Torino (IT)
(72) Inventor: Sponza, Enrico, I-10122 Torino (IT)
(74) Representative: Meindl, Tassilo

(57) **Abstract**

A method for managing payments between a plurality of merchants (1) and a plurality of users comprising the steps of:
- receiving a payment request containing a merchant code identifying said merchant (1) and a user code identifying the user (2) which requests the payment;
- determining whether a database (40) comprises the merchant code and the user code and, in the case where the database (40) comprises the merchant code and the user code, transmitting to the user (2) a message of the Short Message Service comprising a link to a website, wherein the link comprises an univocal code;
- receiving from the user (2) an access request to the website identified via the link;
- verifying whether the access request comprises the univocal code and, in the case where the access request comprises the univocal code, transmitting to the user (2) a webpage which contains a summary of the payment to be authorized, wherein the webpage contains a field for entry of a security code associated to the user (2);
- receiving from the user (2) via the webpage the security code associated to the user (2); and
- retrieving from the database (40) a payment operator (3) associated to the user code, and transmitting an authorization request to the payment operator (3), wherein the authorization request comprises the security code associated to said user (2).

## Description

### Field of the invention

The present invention relates to techniques for the purchase and authorization of payments via mobile devices, such as, for example, cellphones.

The invention has in particular been developed in order to improve the security and the user experience with said payments.

### Description of the related art

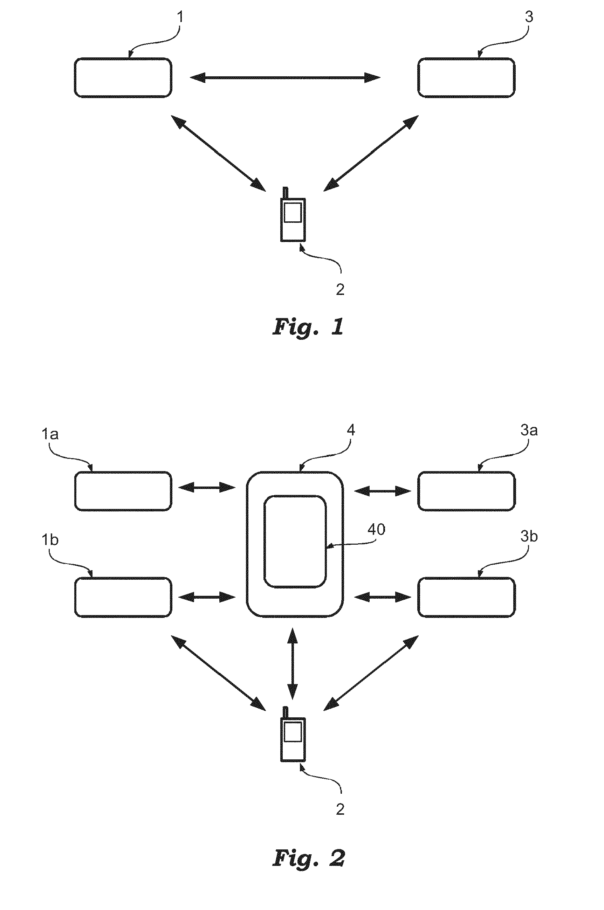

Figure 1 shows a generic architecture of a system for purchase using mobile devices.

In the example considered, a merchant 1 offers certain products or services, and a user wishes to buy some of these products via his or her mobile device 2.

Typically, said payment is not made directly via the telephone operator on the telephone bill or on the residual traffic of a pre-paid card, but the payment is managed via a payment operator 3, such as, for example, the banking service that manages the current account or the credit card of the user.

Consequently, it is of considerable importance how the various communications are made between these participants in the sale so that the operation will be simple and secure. In fact, in the field of payments via mobile devices it is indispensable to authenticate the telephone number of the mobile device 2. However, even though the current mobile communication standards, such as, for example, Global System for Mobile Communications (GSM) or Universal Mobile Telecommunications System (UMTS), envisage mechanisms for authenticating the telephone number of a mobile device 2, said mechanisms are not made available to users, for example to the merchant 1 or the payment operator, by mobile operators.

Furthermore, an architecture that enables management of a plurality of merchants and a plurality of payment operators would be expedient.

### Object and summary of the invention

The object of the invention is to provide an architecture that will be secure, simple, efficient, and inter-operable for the user (buyer), aimed at a multiplicity of users with contained investments for the merchants (sellers) and in compliance with national and international banking standards.

In order to achieve the aforesaid object, the subject of the invention is a method for managing payments between a plurality of merchants and a plurality of users having the characteristics specified in the annexed Claim 1. The invention also regards a corresponding system for managing payments, as well as a computer program product, which can be loaded into the memory of at least one processor and comprises parts of software code that can implement the steps of the method when the product is run on at least one processor. As used herein, reference to such a computer program product is understood as being equivalent to the reference to a computer-readable means containing instructions for control of the processing system to co-ordinate implementation of the method according to the invention. Reference to "at least one processor" is evidently intended to highlight the possibility for the present invention to be implemented in modular and/or distributed form.

Further advantageous characteristics of the invention form the subject of the annexed dependent claims.

All the annexed claims are to be understood as forming an integral part of the technical teaching provided herein in relation to the invention.

As mentioned previously, the object of the invention is to provide an architecture that will be secure, simple, efficient, and inter-operable. According to the present description, said object is achieved via a management system that manages the payments between a plurality of merchants and a plurality of users.

In various embodiments, associated to each merchant is a merchant code, and associated to each user is a user code. For instance, said codes can be stored in a database that is managed by the system for managing the payment.

In various embodiments, the user selects the desired products on an Internet site of a merchant. Next, to start payment and be recognized as client registered in the payment service, the user enters, in a purposely provided field, not his security code but a code that identifies the user, such as, for example, his telephone number or another code associated to the user during registration in the sales service.

Consequently, the merchant or the user sends to the management system a payment request containing the merchant code and the user code, i.e., the management system receives a payment request containing the merchant code and the user code. For this purpose, the management system can comprise a communication interface for receiving payment requests. For instance, said communication interface can be configured for receiving messages of the SMS (Short Message Service) type, e-mails, or a access request to a website.

In various embodiments, the management system verifies whether the merchant is active and whether the user is registered in the payment service. For instance, in various embodiments the management system determines whether the database comprises the merchant code and the user code.

Once it has verified the presence of the codes in the database, the management system generates an electronic message, preferably an SMS message that contains a univocal link to a site managed by the management system. For instance, in one embodiment, the management system transmits to the user an SMS message containing a link to a website, wherein the link comprises a univocal code.

In various embodiments, the user receives said message containing the link to the site of the management system, and by opening the link indicated in the electronic message the browser of the mobile device opens a webpage that contains the summary of the purchases made in which entry of the security code is requested. Furthermore, by opening the link indicated in the SMS message, the user implicitly authenticates the telephone number of the mobile device. Consequently, the management system receives from the user a request for access to the website identified via the link sent to the user and verifies whether the access request comprises the univocal code. Furthermore, in the case where the access request comprises the univocal code, the management system transmits to the user a webpage that contains the summary of the payment to be authorized and a field for entry of the security code of the user.

In various embodiments, the user then authorizes the purchase by entering his security code. Consequently, the management system receives via the webpage the security code of the user. Next, the management system retrieves from the database the user's payment operator, and transmits a request for authorization of the payment to the user's payment operator.

In various embodiments, said request for authorization comprises the security code of the user.

Consequently, according to the present description, the merchant does not gain access to the security code of the user but receives from the management system only a message that confirms or declines the payment.

### Brief description of the drawings

The present invention will now be described in detail with reference to the attached drawings, which are provided purely by way of non-limiting example and in which:
- Figure 1 has already been described previously;
- Figure 2 shows an embodiment of a payment system according to the present invention; and
- Figures 3 to 5 are flowcharts that illustrate details of the payment system of Figure 2.

### Detailed description of embodiments

Illustrated in the ensuing description are various specific details aimed at an in-depth understanding of the embodiments. The embodiments can be obtained without one or more of the specific details, or with other methods, components, materials, etc. In other cases, known structures, materials, or operations are not illustrated or described in detail so that various aspects of the embodiments will not be obscured.

The reference to "an embodiment" or "one embodiment" in the framework of this description is intended to indicate that a particular configuration, structure, or characteristic described in relation to the embodiment is comprised in at least one embodiment. Hence, phrases such as "in an embodiment" or "in one embodiment" that may be present in different points of this description do not necessarily refer to one and the same embodiment. Furthermore, particular conformations, structures, or characteristics can be combined adequately in one or more embodiments.

The references used herein are only provided for convenience and hence do not define the field of protection or the scope of the embodiments.

Figure 2 shows an embodiment of the payment system according to the present invention.

In the embodiment considered, the system comprises a plurality of merchants 1 who offer products and/or services and a plurality of payment operators 3, such as, for example, banking institutions. For instance, in the embodiment considered, two merchants 1a and 1b, and two payment operators 3a and 3b are illustrated.

The system further comprises a system for managing the payment 4 that interfaces the plurality of merchants 1 with the plurality of payment operators 3.

The person skilled in the art will appreciate that some of these aspects of the payment system can be realized via dedicated hardware or software. For instance, in various embodiments, the operations of the system for managing the payment can be implemented via portions of software code that are executed on a computer or a processing system with distributed architecture (referred to as "cloud computing").

In the embodiment considered, the management system 4 is responsible for converting the communications received from the various merchants 1 and sending them to the respective payment operators 3. In this way, it is not necessary for each merchant 1 to be compatible with the various communication protocols of the payment operators 3, but it is sufficient for the merchants 1 to implement only a single communication protocol, namely, the communication protocol of the management system 4.

In various embodiments, the payment operator is not necessarily directly the banking institution of the user, but could also be an authorized payment operator that enables registration and consequent use of the service to clients of banks that do not belong to the service. For instance, the user could register the data of his credit card, and the payment service could use the payment circuit of the credit card.

A possible operation of the payment system of Figure 2 will be described hereinafter.

In the example considered, the mobile device 2 sends, for example via an SMS message, a purchase request to a merchant 1. Next, the merchant 1 forwards said request to the management system 4, which converts the request and forwards the converted request to the correct payment operator 3. Consequently, the merchant 1 can explicitly authenticate, by receipt of the SMS message, the telephone number of the mobile device 2 that sends the request.

In the example considered, to identify the payment operator associated to a specific mobile device or user 2, the management system 4 comprises a database 40 that contains data that associate to each mobile device or user a respective payment operator. For instance, said association can be created via registration to the payment service. For instance, said registration could be made at the payment operator 3, which communicates the registration data to the management system 4. For instance, said registration could be made under a corresponding heading within an Internet banking service, which associates a specific telephone number to a current account, a credit card, or other instruments of payment.

Consequently, the management system 4 receives from a merchant 1 a request for payment that contains data that enable identification of the device or the user that requests a purchase. For instance, in one embodiment, the datum that enables identification of the user is the telephone number of the cellphone or mobile device 2 that has sent the SMS with the request for purchase, or his IMEI (International Mobile Equipment Identity) code. Once the respective payment operator 3 has been identified via the database 40, the management system 4 sends the request for payment to the respective payment operator 3.

The payment operator 3 in turn can then authorize or decline the payment. For instance, the payment operator 3 can verify whether the user has sufficient credit. Consequently, the payment operator 3 sends to the merchant 1 through the management system 4 a message that confirms or declines the payment, and the merchant 1 may deliver/provide the product/service requested.

Consequently, said architecture enables the offer of products of a plurality of merchants 1 to a plurality of users 2 via a simple centralized management system 4. In this way, the payment system is open, and new merchants 1 or payment operators 3 can be added easily.

In the example considered, to increase the security of the system, it could be envisaged that the user has to authorize each payment via entry of a security code. For instance, said mechanism can be useful for preventing payments in the case of theft of the mobile device 2 or requests for payments that are not desired.

For instance, the user could receive this security code during sucription at the payment operator 3. In this case, the user enters said security code to authorize payment, and the code is forwarded together with the purchasing message to the merchant 1. Likewise, the merchant 1 sends said code possibly encrypted together with the request for debiting through the management system 4 to the payment operator 3, which verifies the correctness of the security code.

However, in this case, it is necessary for the user 2 to send to the merchant 1 a request for purchase containing the security code. Consequently, the user 2 must know the electronic address of the merchant 1, such as, for example, an IP address, an e-mail address, a website address, or some other address that enables the merchant to be contacted electronically, or the telephone number to which the request for purchase may be sent. Furthermore, it is of considerable importance for said address to be reliable in order to prevent non-authorized subjects from possibly gaining access to this security code. In fact, said security code (which may also be encrypted) could be re-usable for other payments.

The inventor has noted that said problems could be solved via specific software. For instance, each merchant 1 could develop for this purpose a specific application software that knows the electronic address or the telephone number of the merchant 1.

On the one hand, this involves the need for the user 2 to download the applications on his cellphone in advance, and each merchant 1 is required to develop applications for the main operating systems of the cellphones, such as, for example, Symbian, iOS, Android, or a generic Java application. Furthermore, each user must download a specific application for each merchant 1.

On the other hand, this approach improves the security of the system because the user can verify immediately the reliability of the merchant. Furthermore, modern cellphones are usually configured for enabling only installation of certified applications, and consequently the merchant must be a reliable subject.

The inventor has noted that the problems mentioned above can also be solved via an appropriate payment system in which the user uses a mobile device 2 equipped with an Internet browser and an Internet connectivity. However, as mentioned previously, in this case it is expedient to provide a mechanism that will guarantee that the security code of the user remains protected.

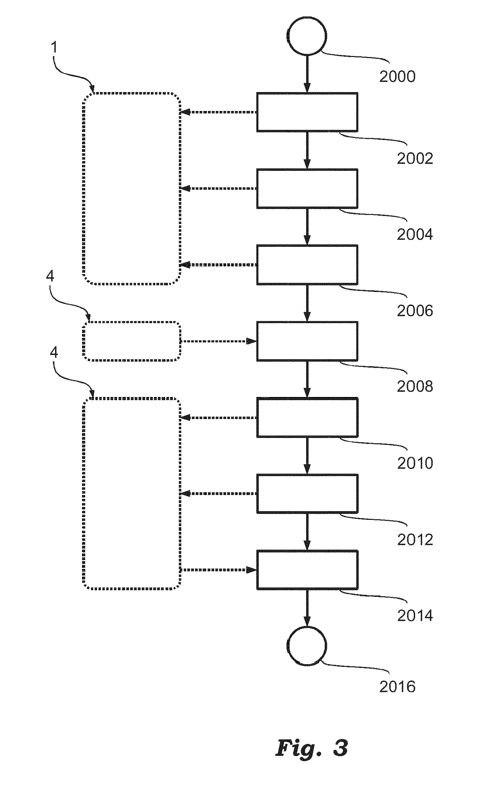

Figure 3 shows a flowchart that summarizes the main operations that are performed by the user or mobile device 2.

After an initial step 2000, the user accesses, at a step 2002, via his web browser, the Internet site of the merchant 1 and selects the desired products, at a step 2004. For instance, the user could open the web browser of his mobile device 2 and enter the web address of the merchant 1 manually. For instance, for this purpose the mobile device 2 can comprise a WiFi (Wireless Fidelity) transceiver and/or a UMTS (Universal Mobile Telecommunications System), HSPA (High-Speed Packet Access), or LTE (Long Term Evolution) modem, and the communication with the site of the merchant 1 can be made via an Internet connection. The user could also open a dedicated application that has saved a predetermined web address or that detects, for example, by means of a video camera of the mobile device 2, a code identifying the address of the website of the merchant 1, such as, for example, a QR (Quick Response) or a Data-Matrix code.

At a step 2006, to start payment and to be acknowledged as customer registered in the payment service, the user enters, in a purposely provided field, not his security code but a code that identifies the user, such as, for example, his telephone number or another code associated to the user during registration in the sales service.

In the embodiment considered, the merchant 1 sends said code identifying the user, together with a summary of the purchases made, containing, for example, the total price to the management system 4.

In the embodiment considered, the management system 4 checks whether the user is registered in the payment service. For instance, to check whether the user is registered in the payment service, it is sufficient to verify the presence of the user code in the database 40. Once it has verified the presence of the user code in the database 40, the management system 4 generates an electronic message, preferably an SMS message that contains a univocal link to a website managed by the management system 4 (and not by the merchant 1). For instance, in one embodiment, said electronic message is sent directly to the telephone number indicated by the user previously.

Consequently, at a step 2008, the user receives said message containing the link to the website of the management system 4.

At a step 2010, by opening the link indicated in the electronic message, the browser of the mobile device 2 opens a webpage that contains the summary of the purchases made, defined as Check-Out-Page, where there is requested entry of the security code. Preferably, said page is an encrypted site, for example according to the Hypertext Transfer Protocol over Secure Socket Layer (HTTPS).

At a step 2012, the user then authorizes the purchase by entering his security code possibly hidden by asterisks.

Finally, at a step 2014, the user receives from the management system 4 (or possibly from the server of the merchant 1) a message that indicates the result of the authorization for payment, and the procedure terminates, at a step 2016. For instance, in one embodiment, once the payment operations are through, the browser is once again addressed on the site of the merchant 1 where it is possible to proceed with user navigation.

Consequently, in various embodiments, said Check-Out-Page is not managed by the merchant 1 but by the management system 4. Consequently, the user can verify immediately the correctness of the link, and the merchant does not gain access to the security code of the user but receives from the management system only a message that confirms or refuses the payment. Furthermore, by opening the link indicated in the SMS message the user implicitly authenticates the telephone number of the mobile device 2.

In various embodiments, the sale system 4 can also be configured for displaying on said Check-Out-Page other data saved in the database 40 and associated to the user and/or telephone number. Preferably, said data are data that have not been entered in the merchant site. For instance, the Check-Out-Page could contain a field for displaying the name of the user. In this way, the user can also verify further the reliability of the site.

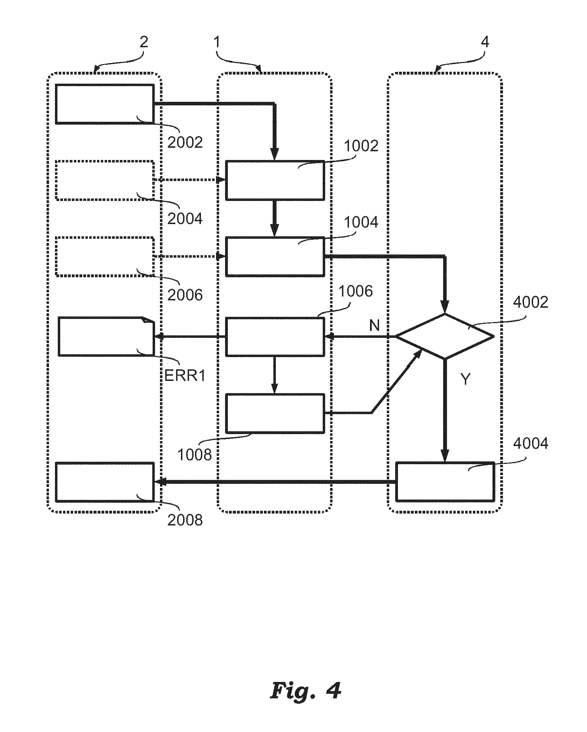

Figure 4 shows a flowchart that summarizes the main operations that are made by the payment system for generating the message containing the link to the site of the management system 4.

As mentioned previously, the user accesses, at a step 2002, the website of a merchant 1.

At step 2004, the user selects, through the site of the merchant 1, the desired product or products. For instance, in one embodiment, the web server of the merchant 1 is configured for managing, at a step 1002, a virtual shopping cart, i.e., a list in which are for each product selected are stored, for example, the product code, the amount, and the price.

At step 2006, the user 2 starts the purchase. For instance, in one embodiment the user enters in a purposely provided field on the site of the merchant 1 the telephone number of the mobile device or another code that enables identification of the user. Consequently, the merchant's server receives, at a step 1004, the code identifying the user.

Consequently, in the embodiment considered, the steps of choice of the cart and entry of the telephone number are performed totally in the Internet site of the merchant 1. The person skilled in the art will appreciate that the telephone number, or in general the code identifying the user, can also be previously filled in via the web browser of the mobile device 2 or be previously filled in by the merchant 1 in the case where the user 2 has already been recognized by the merchant himself, for example via a login to the site of the merchant 1.

Next, the merchant 1 transfers the request for purchase to the management system 4. For instance, said transfer can be made directly at the server level, i.e., the server of the merchant 1 sends the request directly to the management system 4, or indirectly at the client level, i.e., the server of the merchant 1 indicates to the mobile device 2 that subsequent communications must be addressed to a site managed by the management system 4. For instance, in one embodiment, by clicking on a softkey "Proceed" or "Buy", the server of the merchant 1 redirects the browser of the mobile device 2 with the command "HTTP GET" or "HTTP POST" towards the management system 4 attaching the code of the user, such as, for example, the telephone number of the user, and other data that enable identification of the purchase. However, the inventor has noted that for reasons of security it is expedient for said parameters to be exchanged at the server level. In fact, in this way, the management system 4 can comprise also appropriate means, such as, for example, a firewall, which enable only accesses from authenticated IP addresses, such as, for example, the IP addresses of the merchants 1 registered in the payment service.

For instance, in one embodiment, the parameters can include the following data:
- a code identifying a transaction and/or a code identifying the shopping cart; at least the code of a transaction is a univocal code for each merchant 1 that univocally enables identification of the order to be processed;
- a univocal code identifying the merchant;
- the code identifying the user, such as, for example, the telephone number of the mobile device 2; and
- the amount of the purchase to be authorized at the payment operator of the user 2.

Preferably, the parameters can also include the type of accounting, such as, for example, implicit in the request for authorization or explicit, the date and time of the request, and/or a web address to which to forward the results of the transaction.

In one embodiment, the parameters include also a code identifying the type of channel from which the transaction comes. For instance, in this case the management system 4 can comprise a communication interface that is able to manage different types of requests for payment. For instance, in one embodiment the management system can be configured for managing also requests for payment, where the user 2 sends to the merchant 1 an SMS message containing the request for payment.

In a step 4002, the management system 4 receives the request for purchase and processes the request, verifying the data received. For instance, the management system 4 can check the code identifying the merchant and/or the code identifying the user. For instance, in one embodiment, the management system 4 checks whether the merchant identified via the merchant code is active. For example, also the merchant codes could be saved in the database 40, and the management system could verify whether the database contains the merchant code. Furthermore, the management system 4 can verify the registration of the user in the payment service, for example verify whether the database 40 contains the telephone number indicated by the user 2 or a telephone number associated to the user code.

In general, the database 40 can be realized via a single data structure, for example a single table, or could comprise a plurality of tables. Furthermore, the database 40 can be accessible via a single computer or application for management of databases, or can be distributed over various computers or applications for management of databases.

In the case where the user is not registered in the payment service (output "N" from the verification step 4002), i.e., the application of the management system 4 is unable to find the identification of the user in the database 40, the application of the management system 4 notifies said error to the merchant 1, and, in a step 1006 the application of the merchant 1 can send to the user 2 an error message ERR1 that indicates the fact that the user is not registered in the service. The person skilled in the art will appreciate that also in this case the message can be transmitted by the management system 4 to the merchant 1 directly at the server level or indirectly at the client level, for example re-addressing the browser of the user 2 again to the website of the merchant 1. In general, it is preferable for said type of transfer to correspond to the type of transfer used for transferring the data between steps 1004 and 4002. For instance, in one embodiment, said error message ERR1 can be displayed by means of an Internet site that also contains a web address for registration in the payment service and/or a request for re-entering the user code or telephone number. Consequently, the server of the merchant could receive, in a step 1008, also a new telephone number, and the procedure could again pass on to the verification step 4002.

In the case where the user is registered in the payment service (output "Y" from the verification step 4002), i.e., the application of the management system 4 has been able to find the identification of the user and possibly his telephone number, the application of the management system 4 records the operation to be authorized in the pending state and sends, at a step 4004, a message, such as, for example, an SMS message, to the telephone number of the user, where the message comprises a link to an Internet site managed by the management system 4.

Furthermore, in various embodiments, said link contains data that enable identification of the transaction code and/or the code of the shopping cart. Preferably, the link also contains a temporary univocal code generated by the management system 4. For instance, said temporary code can be valid just for a limited period (for example, 5 minutes) to prevent there being attempts of payment that are too distant from the order request.

Consequently, the mobile device 2 can receive, at step 2008, said link, and the user can check the address of the link. Furthermore, said operation guarantees that the user is actually in possession of the mobile device. In fact, by opening the link indicated in the SMS message, the user implicitly authenticates the telephone number of the mobile device 2.

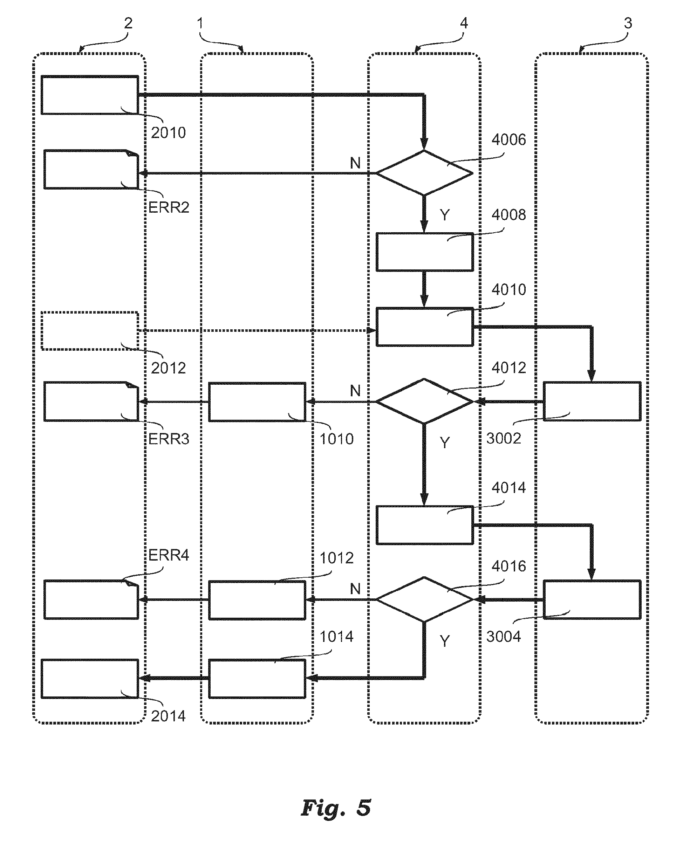

Figure 5 shows a flowchart that summarizes the main operations that are executed by the payment system to make the payment requested.

As mentioned previously, by opening the link present in the SMS message, the user is addressed, at step 2010, to the webpage of the management system 4.

In one embodiment, said site is not static but is generated dynamically. For instance, the management system 4 can be configured for analysing, at a step 4006, the link received, and check, for example, the presence of the transaction code and/or the code of the shopping cart, and the presence of the temporary univocal code. Furthermore, in one embodiment, the management system 4 checks whether there has been recorded previously (see step 4004) a respective pending operation for the transaction code and/or the code of the shopping cart indicated in the link. The system can also make other checks; for example it can verify whether the temporary code is still valid or verify that a specific cart code has been processed only once.

Furthermore, in one embodiment, the management system 4 monitors the number of transactions associated to a certain telephone number. For instance, upon arrival of a request for purchase, the management system 4 verifies how many pending records exist for the telephone number, in order to block the account provisionally. For instance, a user could be blocked provisionally if more than 5 requests are made in 5 minutes or more than 10 requests in a solar day, and the account of the user could be re-activated only 24 hours later. Furthermore, following upon a plurality of provisional blocks there could also be triggered a definitive block of the account, which could be reactivated only with the "manual" intervention by an operator.

In the case where the link entered is not valid (output "N" from the verification step 4006), the application of the management system 4 notifies said error to the user 2 by sending to the user 2 an error message ERR2 that indicates the fact that the link is not valid. For instance, said message could be displayed as contents of the dynamic webpage, or in the case where the user has been recognized, the message could also be sent via SMS.

In the case where the link is valid (output "Y" from the verification step 4006), the management system 4 generates, at a step 4008, the check-out page. In various embodiments, said page displays the summary of purchases containing, for example, the name of the merchant 1 and the total amount of the purchase. For instance, the management system 4 can save said data regarding the summary of purchases during the step 4004 when the operation to be authorized is recorded in the pending state. In various embodiments, said Check-Out-Page is sized *ad hoc* according to the terminal that is connecting up to the site. For instance, through reading of the "user-agent" field it is possible to detect the size of the display and consequently choose the settings best suited for the mobile device of the user.

Moreover, it is requested to type in the security code in the check-out page. Consequently, said webpage is preferably an encrypted site, for example according to the HTTPS protocol.

Consequently, at a step 4010, the management system 4 receives the security code (entered by the user, at step 2012) and forwards the request for authorization to the payment operator 3 associated to the user 2. For instance, once it has identified the user code, the management system 4 can identify in the database 40 the payment operator associated to the respective user. The person skilled in the art will appreciate that the payment operator 3 could also be verified and a respective operator code could be stored already in step 4004.

Consequently, at a step 3002, the application of the payment operator 3 processes the request for authorization, forwarding it where necessary to the authorization circuits, and communicates the result of the operation to the management system 4. In one embodiment, it is moreover envisaged that the payment operator 3 sends a confirmation that payment has been made to the user 2. For instance, the operator 3 can for this purpose send to the user 2 an SMS message that contains a summary of the amount debited and the details regarding the merchant that has requested the payment.

At a verification step 4012, the application of the management system 4, once the result of the operation has been received, verifies the result of the authorization.

In the case where the authorization has been refused (output "N" from the verification step 4012), the application of the management system 4 notifies said error to the user 2, for example by sending an error message ERR3 that indicates the fact that the authorization has been refused. Preferably, said error is also notified to the application of the merchant 1. For instance, in the embodiment considered, the application of the management system 4 directs the user again to the server of the merchant 1, and, at a step 1010 the server of the merchant 1 displays a webpage that contains the error message ERR3. For instance, the browser of the user can be addressed by means of the commands HTTP POST/GET to the site designated by the merchant at step 1004.

Instead, in the case where the authorization has been confirmed (output "Y" from the verification step 4012), the application of the management system 4 updates of the state of the transaction from "pending" to "authorized".

In the case where an implicit accounting has been requested (see step 1004), the management system 4 enters, at a step 4014, the operation that is to undergo accounting in the pending state and forwards it to the payment operator 3.

At a step 3004, the application of the payment operator 3 processes the request for accounting and communicates the result of said operation to the management system 4.

At a verification step 4016, the application of the management system 4, once the result of the accounting has been received, verifies the result of the accounting.

In the case where the accounting has been refused (output "N" from the verification step 4016), the application of the management system 4 notifies said error to the user 2, for example via an error message ERR4 that indicates the fact that the accounting has been refused. Preferably, said error is also notified to the application of the merchant 1. For instance, in the embodiment considered, the application of the management system 4 directs the user again to the server of the merchant 1, and, at a step 1012 the server of the merchant 1 displays a webpage that contains the error message ERR4.

Instead, in the case where the accounting has been confirmed (output "Y" from the verification step 4016), the application of the management system 4 updates the accounting operation from "pending" to "accounting through" and communicates the result to the merchant 1.

Consequently, in the case of a positive result of accounting, the application of the merchant 1 sends, at a step 1014, a message of confirmation of the purchase to the user and authorizes delivery/supply of the good/service. For instance, in the embodiment considered, the application of the management system 4 directs the user again to the server of the merchant 1, and, at a step 1014, the server of the merchant 1 displays a webpage that contains a detailed summary of the purchase. Consequently, in the embodiment considered, the step of notification, and hence of delivery of the payment or of the purchase, is completely to be carried out by the merchant 1, who, after displaying the result of the transaction, could also send a receipt via an SMS message and/or an e-mail.

As mentioned previously, in one embodiment there also exists the possibility of performing an "explicit" accounting, where the product is issued directly following upon the authorization 3002, and the accounting could be made subsequently. Consequently, steps 4014, 3004, 4016, and 1012 are purely optional, and the output "Y" from the verification step 4014 could lead directly to step 1014.

Furthermore, in the embodiment considered, the request for payment can have different results. In one embodiment, said results are communicated to the user 2 via the merchant 1. For instance, in one embodiment, the merchant 1 specifies, in step 1004, a single web address for forwarding the result of the transaction to, and the messages of steps 4002, 4006, 4012, 4016 are all sent to said web address, for example using the commands "HTTP GET" or "HTTP POST". For instance, in one embodiment the following data are returned to the merchant 1:
- the code identifying the merchant;
- the code identifying a transaction and/or the code identifying the shopping cart;
- the code identifying the user, such as, for example, the telephone number of the mobile device 2; and
- the result of the authorization.

Preferably, other data are also transmitted, such as, for example, the amount of the purchase, the date and time of the reply, the type of accounting, and/or the result of the accounting.

Preferably, each result comprises a code identifying the result, possibly the category of the error, and/or the description of the result, such as, for example, the texts of the error messages ERR1, ERR2, ERR3, and ERR4.

In one embodiment, to increase the security of the system, the results of the request for payment are communicated directly at the server level to the merchant 1. For instance, once a request for payment is received, at step 4002, the management system 4 could notify asynchronously the state of the request for payment. Said notifications can include, for example, the positive and/or negative results, for example, of steps 4004, 4006, 4010, 4012, 4016. In this way, it is not necessary to return data to the webpage indicated, but the merchant 1 could create the contents of the final webpage on the basis of the notifications received from the management system 4.

For instance, in one embodiment, only a positive final result could be notified at the server level (step 1014), and the detail of a possible negative result could be communicated at a client level, as described previously.

The person skilled in the art will appreciate that the embodiments described previously present numerous advantages, above all security and inter-operability, which enables registration by the user at a single payment operator and the possibility of operating on any merchant belonging to the system with a mobile device equipped with a simple mobile browser.

Furthermore, in the embodiments described previously, the Check-Out-Page is not managed by the merchant 1, but by the management system 4. In fact, in the solution described, the management system 4 receives, at step 1002, a request for payment containing a merchant code and a user code, and determines, at step 4002, whether the database 40 comprises said codes. In the case where the database 40 comprises the codes, the management system 4 transmits, at step 4004, to the user 2 an SMS message containing a link with a univocal code.

Next, once it has received, at step 2010, an access request to the respective website, the management system 4 can verify, at step 4006, whether the access request comprises the univocal code and, in the case where the access request does comprise the univocal code, the management system can display the Check-Out-Page, which contains a field for entry of the security code.

Finally, when the management system 4 receives the security code in step 2012, it can transmit the authorization request to the payment operator 3 of the user 2.

However, for merchants with a certain number of customers and payment operations, it could be expedient for the user 2 never to leave the website managed by the merchant 1, for example to increase user experience during payment. For this reason, part of the operations described previously can also be executed by the merchant 1 in collaboration with the management system 4. For instance, for this purpose there may be provided some APIs (application programming interfaces) that carry out part of the functions of the management system 4 directly on the servers of the merchant 1.

However, as mentioned previously, in this way, the merchant 1 can gain access to the security code of the user 2, and consequently said solution is recommended only for merchants 1 having a certain level of reliability and trustworthiness.

For instance, in one embodiment, the merchant 1 could send directly the SMS message containing the link to the Check-Out-Page (namely, step 4004), and/or manage the Check-Out-Page (namely, steps 4006, 4008 and 4010).

For instance, in one embodiment, to send the SMS message to the user 2, the merchant 1 sends a request for payment containing his merchant code and the code of the user that requests a payment from the management system 4.

The management system 4, once it has received the request for payment, determines, at step 4002, whether the database 40 comprises the merchant code and the user code.

However, in this case, the management system 4 notifies the merchant 1 only the result of the verification (possibly comprising the telephone number of the user), and the merchant 1 transmits to the user 2 the SMS message containing the link to the Check-Out-Page, managed this time by the merchant 1 himself. In any case, also in this case, the link comprises a univocal code.

Consequently, once the merchant 1 has received a request for access to the Check-Out-Page, he can verify whether the request for access comprises the univocal code and, in the case where the request for access does comprise the univocal code, the merchant 1 can display the Check-Out-Page that contains the field for entry of the security code.

Finally, when the merchant 1 receives the security code via the Check-Out-Page, he forwards the authorization request to the management system 4. The management system 4 can in turn fetch from the database 40 the payment operator 3 of the user and transmit the authorization request to the payment operator 3 of the user 2. Preferably, before transmitting the request for authorization to the payment operator 3, the management system 4 verifies whether a payment for the specific combination of merchant code and user code has been requested.

Consequently, in this case, the communication is synchronous and is started by the merchant 1, who remains waiting for the result of the operation requested, for example the request for payment that requires verification of the user code (i.e., the telephone number of the user 2) and the request for authorization for the payment.

Finally, also part of the operations described previously with reference to the merchant 1 can be executed by the management system 4. For instance, in one embodiment, the management system 4 could manage only the shopping cart (step 1002), and by start the payment the user could be already directed to the management system 4; i.e., the user could enter his user code or telephone number already on a webpage managed by the management system 4. Consequently, steps 1004, 1006 and/or 1008 could be executed also by the management system 4.

Of course, without prejudice to the principle of the invention, the details of implementation and the embodiments may vary widely with respect to what has been described and illustrated herein purely by way of example, without thereby departing from the scope of the present invention, as defined by the ensuing claims.

## Claims

1. A method of managing payments between a plurality of merchants (1) and a plurality of users comprising the steps of:
- receiving (1002) a payment request containing a merchant code identifying said merchant (1) and a user code identifying the user (2) which requests the payment;
- determining (4002) whether a database (40) comprises said merchant code and said user code;
- in the case where said database (40) comprises said merchant code and said user code, transmitting (4004) to said user (2) a message of the Short Message Service comprising a link to a website, wherein said link comprises an univocal code;
- receiving (2010) from said user (2) an access request to said website identified via said link transmitted to said user (2);
- verifying (4006) whether said access request to said website comprises said univocal code;
- in the case where said access request to said web-site comprises said univocal code, transmitting (4008) to said user (2) a webpage which contains a summary of the payment to be authorized, wherein said webpage contains a field for entry of a security code associated to said user (2);
- receiving (2012) from said user (2) via said webpage the security code associated to said user (2); and
- retrieving (4010) from said database (40) a payment operator (3) associated to said user code, and transmitting an authorization request to said payment operator (3), wherein said authorization request comprises said security code associated to said user (2).

2. The method according to Claim 1, comprising the steps of:
- receiving (3002) from said payment operator (3) information that enables verification of whether said authorization request has been authorized, and
- transmitting (4016) said information that enables verification of whether said authorization request has been authorized to said merchant (1).

3. The method according to Claim 1 or Claim 2, wherein said user code is a telephone number, and wherein the method includes:
- transmitting said message of the Short Message Service to said telephone number.

4. The method according to Claim 1 or Claim 2, comprising the steps of:
- retrieving (4010) from said database (40) a telephone number associated to said user code, and
- transmitting said message of the Short Message Service to said telephone number associated to said user code.

5. The method according to any of the previous claims, wherein said payment request (1) comprises:
- a code identifying a transaction and/or a code identifying a virtual shopping cart;
- the amount of the purchase to be authorized at the payment operator of the user (2).

6. The method according to any of the previous claims, wherein said payment request (1) comprises:
- a web address managed by said merchant (1) to which to forward the results of the transaction, wherein said results comprise said information that enables verification of whether said authorization request has been authorized.

7. The method according to any of the previous claims, comprising:
- assigning to each univocal code an expiry date,
and
- verifying if said univocal code comprised in said access request to said web-site is still valid.

8. The method according to any of the previous claims, comprising:
- monitoring the number of payment request that are associated to a given user code.

9. A system (4) for managing payments between a plurality of merchants (1) and a plurality of users (2), **characterized in that** said system (4) is configured for implementing the method according to any of Claims 1 to 8.

10. A computer-program product that can be loaded into a memory of at least one processor and comprises portions of software code for implementing the method according to any of Claims 1 to 8.
